# EUROPEAN PATENT APPLICATION

(11) **EP 4 813 937 A1**
(43) Date of publication of application: **30.09.2026**
(21) Application number: 25183686.2
(22) Date of filing: 18.06.2025
(51) Int. Cl.: C03B 5/235, C03B 5/425, C03B 5/44

(54) **INTERNAL WALL AND FURNACE**

(30) Priority: 28.03.2025 IT 202500006630; 28.03.2025 IT 202500006636
(71) Applicant: Combustion Consulting Italy S.r.l., 37139 Verona (IT)
(72) Inventor: BOULANOV, Oleg, 37066 Sommacampagna (IT)
(74) Representative: Rapisardi, Mariacristina

(57) **Abstract**

There is provided an internal wall for a furnace for melting material, the internal wall configured to be connected to a plurality of internal walls of the furnace, so that, in use, the internal wall is a first internal wall of the plurality of internal walls of the furnace, and the first internal wall and the plurality of internal walls of the furnace define the melting chamber at least partly enclosed by the first internal wall and the plurality of internal walls; the first internal wall including: a burner aperture provided in the first internal wall, the burner aperture being configured to receive a part of a burner which outputs heat to generate heat within the melting chamber; and a barrier carried by the first internal wall, wherein the barrier comprises at least one barrier wall which extends outwardly from the first internal wall, the or each barrier wall being positioned at a respective barrier distance from the burner aperture wherein the or each barrier wall is arranged so that the barrier at least partly surrounds the burner aperture so that, in use, the barrier retains a layer of solidified material over a portion of the first internal wall around the barrier to protect the portion of the first internal wall from damage by forces and heat within the melting chamber.

## Description

### FIELD

The present specification relates to an internal wall for a furnace. More particularly, although not exclusively, the present specification relates to an internal wall for a furnace and a furnace for melting material.

### BACKGROUND

Furnaces for melting materials typically include liquid cooled metal surfaces operating as the internal surfaces of the furnace. The material to be melted may be vitrifiable material.

The burners of such furnaces operate at high temperatures, e.g., at temperatures of up to 1700 degrees Celsius. Therefore, rather than a burning of the burner and a steadily controlled melt of the vitrifiable material, melting of the vitrifiable material may be comparably aggressive, such that a series of explosions at the burning location (the zone of combustion) of the burner may occur. Each explosion may therefore release a significant amount of energy quickly at the burner.

Internal surface(s) of the furnace may be liquid cooled; accordingly, when molten vitrified material contacts the surface(s) of the furnace, the temperature differential between the molten melt and the internal surface(s) of the furnace may create significant thermal shock and/or wear on the internal surface material of the furnace.

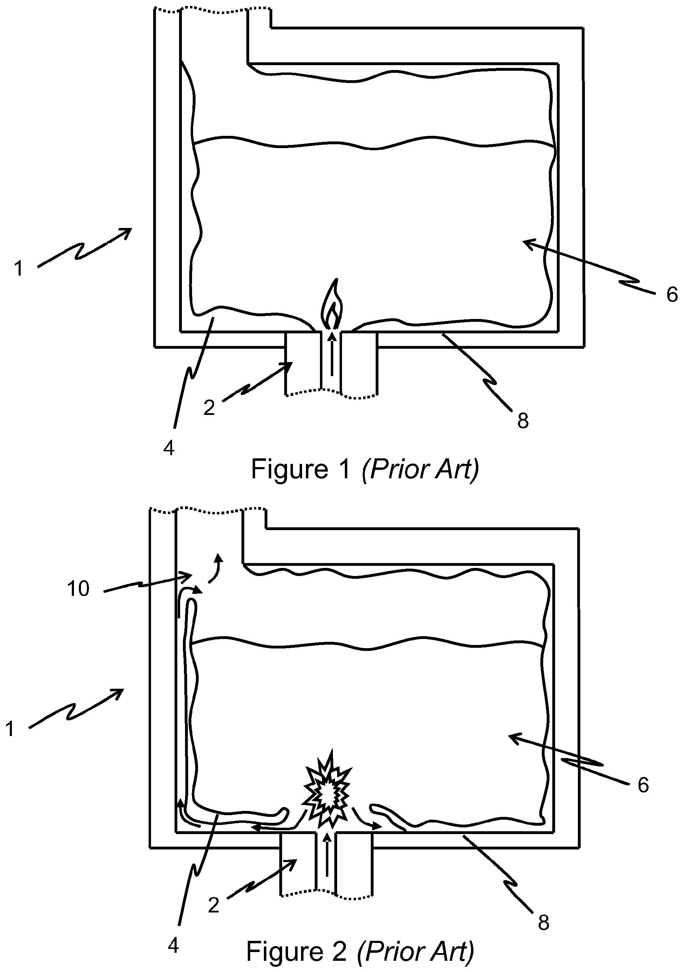

Since the internal surface(s) of the furnace are often held at a lower temperature than the melt, the melt formed by melting the material may form solidified (e.g., devitrified) melt on the internal surface of the furnace, e.g., the internal wall(s). In particular, the melt may cool on the surface of the furnace and solidify, creating a layer of solidified melt, as shown in Figure 1. In other words, the molten melt may devitrify on the internal surfaces of the furnace. As a result, the solidified melt may protect the internal surface(s) of the furnace by virtue of the formed layer of solidified material on the surface(s). For example, the solidified melt may form a protective layer of material, acting as a barrier, between the internal surface of the furnace and the molten melt. The solidified melt may form on and around the burner.

With reference to Figures 1 and 2, in prior furnaces 1, in use, a series of explosions and releases of energy at the zone of combustion, such as explosions releases of energy produced by the burner may remove the solidified melt from the location around the burner 2, for example on the internal wall(s) of the furnace. This may cause and/or allow for combustion gases and/or fuel (e.g., air and/or fuel) to migrate between the surface 8 of the internal wall(s) of the furnace and the solidified melt 4, as shown in Figure 2. As the internal wall(s) of the furnace are often water cooled, the molten melt 6 may devitrify on the newly exposed surface 8 of the furnace, and then may subsequently be removed from the surface by further releases of energy, e.g., explosions. This process may repeat multiple times. When the solidified melt 4 is forcibly removed from the internal wall 8 of the furnace 1, the surface material of the internal wall 8 may degrade, e.g., by the solidified melt 4 ripping off a portion of the surface material of the internal surface. Accordingly, when the devitrification and removal from the surface 8 occurs multiple times, the internal wall(s) of the furnace 1 may significantly degrade. Further, as described herein combustion gases may migrate between the layer of solidified melt 4 and the surface(s) 8 of prior furnaces, as shown in Figure 2. Accordingly, heat energy from the burner 2 may be diverted and redirected elsewhere in the furnace, to an undesirable location, as indicated generally by reference numeral 10 in Figure 2.

It is desirable to provide a furnace wherein undesired forcible removal of solidified material from the internal surface of the furnace is mitigated and/or prevented during normal use.

It is an object of the present specification to overcome at least some of the aforementioned problems.

### BRIEF DESCRIPTION OF THE INVENTION

The present invention provides an internal wall for a furnace as claimed in claim 1 and a furnace as claimed in claim 14.

The present invention also provides preferred embodiments as claimed in the dependent claims

### REPRESENTATIVE CLAUSES

Representative features are set out in the following clauses, which stand alone or may be combined, in any combination, with one or more features disclosed in the text and/or drawings of the specification.
1. An internal wall for a furnace for melting material, the internal wall configured to be connected to a plurality of internal walls of the furnace, so that, in use, the internal wall is a first internal wall of the plurality of internal walls of the furnace, and the first internal wall and the plurality of internal walls of the furnace define the melting chamber at least partly enclosed by the first internal wall and the plurality of internal walls;
   the first internal wall including:
      a burner aperture provided in the first internal wall, the burner aperture being configured to receive a part of a burner which outputs heat to generate heat within the melting chamber; and
   a barrier carried by the first internal wall, wherein the barrier comprises at least one barrier wall which extends outwardly from the first internal wall, the or each barrier wall being positioned at a respective barrier distance from the burner aperture
   wherein the or each barrier wall is arranged so that the barrier at least partly surrounds the burner aperture so that, in use, the barrier retains a layer of solidified material over a portion of the first internal wall around the barrier to protect the portion of the first internal wall from damage by forces and heat within the melting chamber.
2. The internal wall according to clause 1, wherein the at least one barrier wall is positioned proximal the burner aperture and through the first internal wall.
3. The internal wall according to clause 1 or 2, wherein the at least one barrier wall of the barrier is integrally formed with the first internal wall of the melting chamber.
4. The internal wall according to any preceding clause, wherein the at least one barrier wall of the barrier is mounted to the first internal wall of the melting chamber via a mounting arrangement, the mounting arrangement comprising at least one of:
   a weld between the barrier wall and the first internal wall; and
   a bolt arrangement extending through a mounting portion of the at least one barrier wall and the first internal wall.
5. The internal wall according to any preceding clause, wherein the or each barrier wall includes an internal conduit for receiving cooling fluid.
6. The internal wall according to any preceding clause, wherein the first internal wall comprises an internal conduit for receiving cooling fluid.
7. The internal wall according to any of clauses 1 to 4, wherein
   the or each barrier wall includes an internal conduit for receiving cooling fluid,
   the first internal wall comprises an internal conduit for receiving cooling fluid, and
   the internal conduit of the first internal wall and the internal conduit of the or each barrier wall forms a continuous internal conduit
8. The internal wall according to any preceding clause, wherein the barrier comprises:
   at least two barrier walls; and
   a split portion located between terminal ends of each barrier wall, wherein the split portion has a split length, and wherein the split length is 1 to 10 mm.
9. The internal wall according to any preceding clause, further comprising concrete covering at least a portion of the surface of the first internal wall.
10. The internal wall according to any preceding clause, wherein the barrier is comprised of one or more of:
   steel;
   steel including a surface coating; and
   tungsten.
11. The internal wall according to any preceding clause, wherein the barrier distance is 2 to 10 cm.
12. The internal wall according to any preceding clause, further comprising:
   at least one additional burner aperture provided in the first internal wall of the plurality of internal walls, the at least one additional burner aperture being configured to receive a part of a burner which outputs heat to generate heat within the melting chamber; and
   at least one additional barrier according to any preceding clause surrounding each of the at least one burner aperture(s).
13. The internal wall according to any preceding clause, wherein the barrier has a wall thickness of 3 to 10 mm.
14. The internal wall according to any preceding clause, wherein the or each of the at least one barrier wall has a cross-sectional profile that is one of triangular and trapezoidal.
15. The internal wall according to any preceding clause, wherein the burner comprises a solidified material collecting surface profile, and wherein the surface profile comprises a discontinuous surface profile.
16. The internal wall according to any preceding clause, wherein the material has a melting point between and including 700 to 1700 degrees Celsius; preferably wherein the material has a melting point between and including 700 to 1200 degrees Celsius; and preferably wherein the material is vitrifiable material.
17. A furnace for melting material, the furnace comprising:
   a plurality of internal walls, wherein one of the plurality of internal walls is an internal wall according to any of clauses 1 to 16; and
   a melting chamber at least partly enclosed by the plurality of internal walls.
18. The furnace according to clause 17, wherein the material has a melting point between and including 700 to 1700 degrees Celsius; preferably wherein the material has a melting point between and including 700 to 1200 degrees Celsius; and preferably wherein the material is vitrifiable material.

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a side cross-sectional view of a prior furnace;
FIGURE 2 is a side cross-sectional view of a prior furnace;
FIGURE 3 is a side cross-sectional view of a furnace, embodying the present disclosure;
FIGURE 4 is a top-down view of an internal wall of a furnace, embodying the present disclosure;
FIGURE 5 is a side cross-sectional view of a furnace, embodying the present disclosure;
FIGURE 6 is a top-down view of an internal wall of a furnace, embodying the present disclosure; and
FIGURE 7 is a side cross-sectional view of a furnace, embodying the present disclosure.

### DETAILED DESCRIPTION OF THE DISCLOSURE

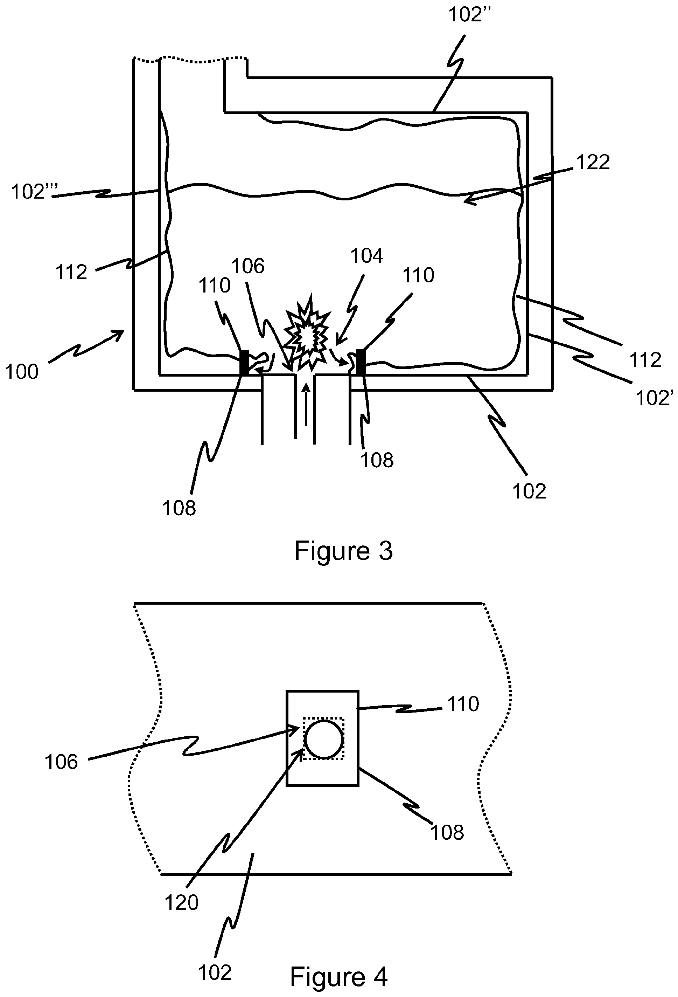

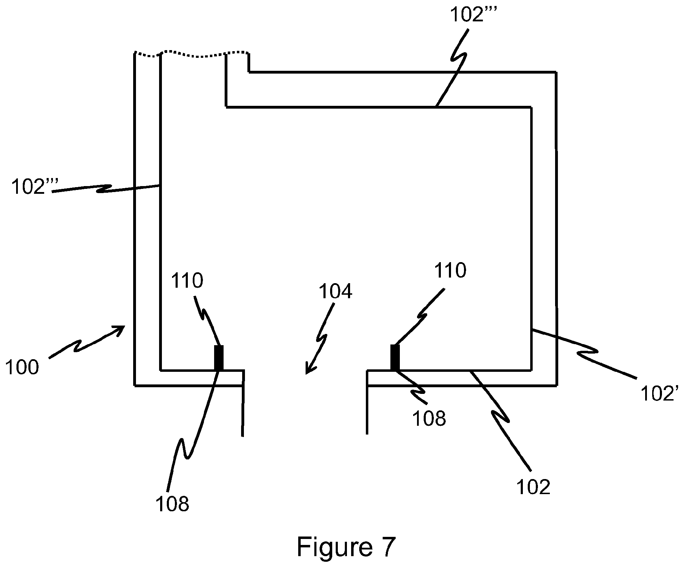

With reference to Figures 3 to 7, particularly Figure 7, there is provided a furnace 100 for melting material, the furnace 100 comprising: a plurality of internal walls 102, 102', 102", 102‴; a melting chamber at least partly enclosed by the plurality of internal walls 102, 102', 102", 102‴; a burner aperture 104 provided in a first internal wall 102 of the plurality of internal walls 102, 102', 102", 102"', the burner aperture 104 being configured to receive a part of a burner 106 which outputs heat to generate heat within the melting chamber; and a barrier 108 carried by the first internal wall 102, wherein the barrier 108 comprises at least one barrier wall 110 which extends outwardly from the first internal wall 102, the or each barrier wall 110 being positioned at a respective barrier distance from the burner aperture 104 and the or each barrier wall 110 being arranged so that the barrier 108 at least partly surrounds the burner aperture 104 so that, in use, the barrier 108 retains a layer of solidified material 112 over a portion of the first internal wall 102 around the barrier 108 to protect the portion of the first internal wall 102 from damage by forces and heat within the melting chamber. When described herein, the layer of solidified material 112 may otherwise be described as a layer of solidified melt.

Accordingly, the furnace 100 may be provided separate to a burner 106.

As shown in Figure 3, in particular, the furnace 100 may further comprise a burner 106 coupled to the first internal wall 102, the burner aperture 104 receiving the part of the burner 106 which outputs heat to generate heat within the melting chamber. Accordingly, the burner 106 may be positioned at least partly within the burner aperture 104. The burner 106 may be attached to the first internal wall 102 of the furnace 100 by a retaining plate positioned below the burner (not shown), below the first internal wall 102 (for example, outside the melting chamber), and with securing means, such as a bolt arrangement or welding.

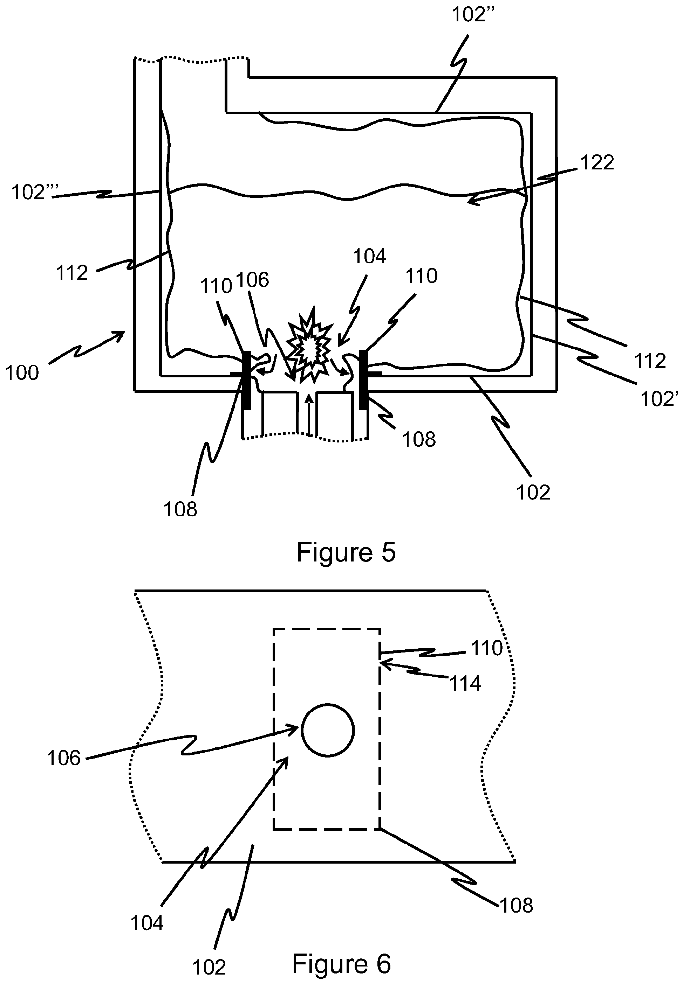

With reference to Figures 3 to 6, particularly Figures 3 and 5, there is also provided a furnace 100 for melting material, the furnace 100 comprising: a plurality of internal walls 102, 102', 102", 102"'; a melting chamber at least partly enclosed by the plurality of internal walls 102, 102', 102", 102‴; a burner 106 provided in or through a first internal wall 102 of the plurality of internal walls 102, 102', 102", 102‴, the burner 106 being configured to output heat to generate heat within the melting chamber; and a barrier 108 carried by the first internal wall 102, wherein the barrier 108 comprises at least one barrier wall 110 which extends outwardly from the first internal wall 102, each barrier wall 110 being positioned at a respective barrier distance from the burner 106 and each barrier wall 110 being arranged so that the barrier 108 at least partly surrounds the burner 106 so that, in use, the barrier 108 retains a layer of solidified material 112 over a portion of the first internal wall 102 around the barrier 108 to protect the portion of the first internal wall 102 from damage by forces and heat within the melting chamber.

As described herein, any one of, any combination of, or all of the features and/or advantages of the furnace 100 as described herein may be provided with respect to the burner and barrier arrangement as described herein and/or the first internal wall 102 as described herein.

As will be appreciated, the barrier distance may therefore be described with reference to, i.e., as a distance from, the burner 106, if present, or with reference to, i.e., as a distance from, from the burner aperture 104, if present. As described herein, in use, the barrier 108 retains a layer of solidified material 112 over a portion of the first internal wall 102 around the barrier 108. The portion of the first internal wall 102 around the barrier 108 may be a portion of the first internal wall 102 between the barrier 108 and the internal walls of the furnace 100 (for example, walls 102' 102", 102‴, 102‴). Accordingly, the barrier 108 may retain a layer of solidified material on a portion (or all) of the internal walls of the furnace 100, e.g., the walls of the melting chamber.

As will also be appreciated, and as described in more detail herein, the or each barrier wall 110 may additionally or alternatively be positioned through the burner aperture 104, the or each barrier wall 110 being arranged so that the barrier 108 at least partly surrounds the burner aperture 104 so that, in use, the barrier 108 retains a layer of solidified material 112 over a portion of the first internal wall 102 around the barrier 108 to protect the portion of the first internal wall 102 from damage by forces and heat within the melting chamber.

As shown in Figures 3 to 5, the first internal wall 102 may be a floor of the furnace 100. It will be appreciated that the first internal wall 102 as described herein may be another wall of the furnace 100, e.g., a side wall, such as walls 102', 102" as shown in Figures 3 and 5. The barrier 108 as described herein may fully surround the burner aperture 104 and/or the burner 106.

The burner 106 as described herein may be an axial burner. The furnace 100, internal wall (e.g., 102), and/or burner and barrier arrangement as described herein may comprise a plurality of burners 106, e.g., axial burners, in series, e.g., spaced along a length. Accordingly, the burner 106 as described herein may comprise a plurality of burners 106, e.g., axial burners, in series, e.g., spaced along a length. It will be appreciated that the barrier 108 may at least partially surround the plurality of burners 106 as described herein in relation to the burner 106.

As described herein, and as shown in Figures 1 and 2, in prior furnaces 1, in use, a series of explosions and releases of energy at the zone of combustion, such as explosions releases of energy produced by the burner may remove the solidified melt 4 from the location around the burner 2, for example on the internal wall(s) of the furnace, and cause and/or allow for combustion gases and/or fuel (e.g., air and/or fuel) to migrate between the surface 8 of the internal wall(s) of the furnace and the solidified melt 4, as shown in Figure 2. As the internal wall(s) of the furnace are often water cooled, the molten melt 6 may solidify (e.g., devitrify) on the newly exposed surface 8 of the furnace, and then may subsequently be removed from the surface by further releases of energy, e.g., explosions. This process may repeat multiple times. When the solidified melt 4 is forcibly removed from the internal wall 8 of the furnace 1, the surface material of the internal wall 8 may degrade, e.g., by the solidified melt 4 ripping off a portion of the surface material of the internal surface. Accordingly, when the solidification (e.g., devitrification) and removal from the surface 8 occurs multiple times, the internal wall(s) of the furnace 1 may significantly degrade. Further, as described herein combustion gases may migrate between the layer of solidified melt 4 and the surface(s) 8 of prior furnaces, as shown in Figure 2. Accordingly, heat energy from the burner 2 may be diverted and redirected elsewhere in the furnace, to an undesirable location, as indicated generally by reference numeral 10 in Figure 2.

The furnace 100 as described herein (and/or, in use, the burner and barrier arrangement and/or the internal wall, e.g., the first internal wall 102 as described herein), may substantially reduce, prevent, and/or inhibit solidified melt removal from the first internal wall 102 of the furnace 100 as described herein. In particular, as shown in Figures 3 and 5, in particular, the barrier 108, and positioning of the at least one barrier wall 110, may substantially reduce, prevent, and/or inhibit solidified melt removal from the first internal wall 102 surrounding the barrier 108. As shown in Figures 3 and 5, in particular, the barrier 108 may prevent migration of combustion gases and/or fuel through and/or underneath the layer of solidified material 112 (for example, between the first internal wall 102 and the layer of solidified material 112). Accordingly, presence of the barrier 108 as described herein may result in the internal surfaces of the furnace 100, including the first internal wall 102, having increased longevity. In particular, the continuous repetition of the cycle of removal and solidification (e.g., devitrification) of melt as described herein on the first internal wall 102 (at least) of the furnace 100 may be substantially reduced, prevented, and/or inhibited.

The material as described herein may have a melting point between and including 700 to 1700 degrees Celsius. The material as described herein may have a melting point between and including 700 to 1200 degrees Celsius. The material as described herein may be vitrifiable material.

As described herein, the term "melt" and/or "material" in respect of the material, vitrifiable material, and/or devitrified material may refer to any melt and/or material suitable for use in the furnace 100. For example, the melt and/or material may comprise glass, basalt, wet scraps, industrial dust, and/or any other materials and/or melts suitable for use in the glass furnace 100. Accordingly, reference herein to "material" may be considered to additionally or alternatively mean "vitrifiable material".

It will also be appreciated that reference to the term "solidified" may otherwise be considered to mean "devitrified" (e.g., devitrified material or devitrified melt), when a vitrifiable material is used in relation to the burner and barrier arrangement, internal wall, furnace 100, process, and use as described herein. Accordingly, solidified melt as described herein may be considered to be devitrified melt, when the material is a vitrifiable material.

As will be appreciated, the burner 106 or burners 106 as described herein may include at least one fuel conduit, e.g., an injector, for introducing an air/fuel and/or an oxygen/fuel mixture to an exit conduit of the burner 106. Combustion may therefore occur at the exit conduit of the burner 106. The combustion may occur within the melt, for example the glass melt. Accordingly, the burner 106 (or burners 106) as described herein may include one injector (e.g., a fuel/air injector), or more than one injector (e.g., a fuel/air injector).

The burner 106 (or burners 106) may be provided in a burner aperture 104 provided in the first internal wall 102. The burner aperture 104 may surround the burner 106. A spatial gap may be provided between the burner 106 (or burners 106) and the burner aperture 104. Accordingly, there may be a spatial gap between the burner 106 (or burners 106) and the first internal wall 102. As described in more detail herein, the gap may be filled with material, for example, concrete, or other material, e.g., ceramic fibres, mixture of cement and fibres, a layer of devitrified melt, e.g., glass.

As shown in Figures 5 and 6, the at least one barrier wall 110 may be positioned proximal the burner aperture 104 and through the first internal wall 102. Accordingly, the at least one barrier wall 110 may extend through the first internal wall 102 through the burner aperture 104, for example as shown in Figure 5. When provided in this way, there may not be considered to be a barrier distance between the barrier wall 110 and the burner aperture 104, but a barrier distance may be provided between the barrier wall 110 and the burner 106 (or burners 106). As described in more detail herein, the barrier 108 (including the at least one barrier wall 110) may be permanently, removably, or semi-permanently mounted through the aperture of the first internal wall 102. The at least one barrier wall 110 may be welded to the first internal wall 102. The at least one barrier wall 110 may be bolted, or otherwise removably secured using a securing arrangement, to the first internal wall 102. The at least one barrier wall 110 may be secured to the first internal wall 102 by a combination of securing arrangements, e.g., bolts, and welding. It will be appreciated that the or each of the at least one barrier wall 110 may be secured to the first internal wall 102 of the furnace 100 by temporary welding or permanent welding.

As will be appreciated, when the at least one barrier wall 110 is not positioned through the burner aperture 104, the at least one barrier wall 110 may extend from the first internal wall 102 (for example, mounted directly on the surface of the first internal wall 102, and not through the wall 102, using a securing arrangement as described herein).

The at least one barrier wall 110 of the barrier 108 may be integrally formed with the first internal wall 102 of the melting chamber. Accordingly, the barrier 108 may be part of the first internal wall 102. In particular, the barrier 108 may be unitary with the first internal wall 102. The barrier 108 may be constructed into, i.e., with, the first internal wall 102. The barrier 108 may be integrally formed with the first internal wall 102 by other means, in particular, via welding, for example.

As described herein, the at least one barrier wall 110 of the barrier 108 may be mounted to the first internal wall 102 of the melting chamber via a mounting arrangement. The mounting arrangement may comprise a weld between the barrier wall 110 and the first internal wall 102. The mounting arrangement may additionally or alternatively comprise a bolt arrangement extending through a mounting portion of the at least one barrier wall 110 and the first internal wall 102.

The or each barrier wall 110 may include an internal conduit for receiving cooling fluid (not shown). Accordingly, in use, the or each barrier wall 110 may be cooled by cooling fluid. Accordingly, solidified melt may form on and/or around the or each barrier wall 110, which may result in protection of the material of the or each barrier wall 110 from the melt and/or heat cycling as described herein. The internal conduit of the or each barrier wall 110 may be integrally formed with a conduit of the first internal wall 102, as described in more detail herein, or may be otherwise connectable to the conduit of the first internal wall 102, for example when the barrier wall 110 is mountable to the first internal wall.

The first internal wall 102 of the melting chamber may comprise an internal conduit for receiving cooling fluid. Accordingly, in use, the first internal wall 102 may be cooled by the cooling fluid.

Accordingly, the cooled surface of the first internal wall 102 may retain a layer of solidified material 112 thereon. When multiple barrier walls 110 are provided, each of the barrier walls 110 (or a number of the barrier walls 110) may comprise an internal conduit for receiving cooling fluid, and the internal conduit of each of the barrier walls 110 (or a number of the barrier walls 110) may be connected to the internal conduit of the first internal wall 102. Accordingly, as will be appreciated, the first internal wall 102 and the barrier wall(s) 110 may be cooled by the cooling fluid, in use.

Accordingly, the internal conduit of the first internal wall 102 and the internal conduit of the or each barrier wall 110 may form a continuous internal conduit.

As shown in Figure 6, for example, the barrier 108 may comprise at least two barrier walls 110; and a respective split portion 114 located between terminal ends of each barrier wall 110. The split portion 114 may have a split length. Accordingly, the barrier 108 may be discontinuous around the burner aperture 104 and/or the burner. The barrier 108 may be segmented into a plurality of barrier walls 110 along the length of the barrier 108, each barrier wall 110 separated by a respective split portion 114. The split portion(s) 114 of the barrier 108, located between each of the barrier walls 110, may allow for thermal expansion of the barrier walls 110. Accordingly, when a split portion 114 (or split portions 114) is provided, deformation of the barrier 108 surrounding the burner aperture 104 and/or burner may be substantially prevented, for example, the barrier 108 as a whole may thermally expand and contract without affecting the overall structure of the barrier 108.

The split length may be 1 mm to 10 mm. The split length may therefore be relatively small, such that explosions and/or combustion gas generation is not sufficient to pass between the split portion 114. Accordingly, the barrier 108 may include a split or splits in the barrier wall 110 configuration, whilst retaining solidified material 112 around the barrier 108.

The furnace 100 may further comprise concrete covering at least a portion of the surface of the first internal wall 102 (not shown). The furnace 100 may further comprise concrete covering a majority (or all) of the surface of the first internal wall 102. The furnace 100 may comprise concrete covering at least a portion of the surface of the first internal wall 102 between the barrier 108 and the melting chamber defined by the plurality of internal walls 102, 102', 102", 102'". The furnace 100 may comprise concrete covering a majority (or all) of the surface of the first internal wall 102 between the barrier 108 and the melting chamber defined by the plurality of internal walls 102, 102', 102", 102‴. Accordingly, the furnace 100 may comprise concrete between the side of the barrier 108 facing away from the burner aperture 104 and/or the burner 106, along the surface of the first internal wall 102, and up to the internal walls surrounding the first internal wall 102, e.g., the upstanding walls 102', 102" of the furnace 100 as shown in Figures 3 and 5. The layer of concrete may protect the surface of the first internal wall 102 and/or the burner 106. In particular, thermal shock may be reduced on the surface of the first internal wall 102 and/or the burner 106. The layer of concrete may be replaced by solidified material 112 over time. In particular, molten melt 122 (e.g., vitrified melt 122) may effectively "eat" away the layer of concrete, i.e., the molten melt 122 (e.g., vitrified melt 122) may remove the layer of concrete over time, and the molten melt 122 (e.g., vitrified melt 122) may solidify (e.g., devitrify) on the surface of the first internal wall 102 and/or the burner 106, once the layer of concrete is fully removed (at least at a portion of the first internal wall 102 and/or the burner 106 where the layer of concrete has been removed). It will be appreciated that if concrete is placed on the surface of the burner 106, that the conduit for producing and combusting combustion gases will not be covered.

The barrier 108 may be comprised of steel. The barrier 108 may be comprised of steel including a surface coating. The coating may be a surface coating resistant to chemical attack and/or thermal shock and/or thermal attack and/or particle deposition. The barrier 108 may be comprised of tungsten. The barrier 108 may be comprised of multiple materials, for example an alloy. The barrier 108 may be comprised of any material suitable for use within the furnace 100, for example any material suitable for temperatures of up to 1700 degrees Celsius. As will be appreciated, the barrier wall(s) 110 of the barrier 108 may not be the same material, for example, the barrier walls 110 may be comprised of various materials, for example, some barrier walls 110 may be comprised of steel, and some barrier walls 110 may be comprised of, for example, tungsten. Accordingly, as described herein, the barrier may be comprised of one or more of steel; steel including a surface coating; and tungsten.

The burner 106 may comprise a solidified material, or devitrified material, collecting surface profile. The surface profile may comprise a discontinuous surface profile. The solidified material collecting surface profile may be located on an upper wall of the (or each) burner 106. The upper wall of the burner 106 may face the melting chamber in use. The solidified material collecting surface profile may project from the upper wall. The upper wall of the burner 106 may be angled with respect to the surface of the first internal wall 102 of the furnace 100. The burner 106 may comprise two upper walls. The upper wall(s) may be angled at an angle of 40 to 50 degrees with respect to the surface of the first internal wall 102 of the furnace 100. The upper wall(s) may be angled inwardly at an angle of 40 to 50 degrees (for example, 45 degrees) with respect to the surface of the first internal wall 102 of the furnace 100; accordingly, the portion of the upper wall located proximal to an outer perimeter of the burner 106 (defined by an edge of the upper wall) may be located higher than the portion of the upper wall located closer to a central portion of the burner 106. The burner 106 may comprise a secondary upper wall, or, when more than one upper wall is present, secondary upper walls. The upper wall(s) and the secondary upper wall(s) may form a triangular cross-section. Accordingly, the secondary upper wall(s) may be angled with respect to the surface of the first internal wall 102. The secondary upper wall(s) may be angled outwardly at an angle of 40 to 50 degrees (for example, 45 degrees) with respect to the surface of the first internal wall 102 of the furnace 100, e.g., towards the surface of the first internal wall 102 of the furnace 100; accordingly, the secondary upper wall at an outer perimeter of the burner 106 (defined by an edge of the secondary upper wall) may be located lower than the upper wall located closer to a central portion of the burner 106.

The burner 106 may include a textured surface profile, which may form at least part of the solidified melt collecting surface profile. Such a surface profile may provide a surface suitable for collecting and retaining solidified material 112 thereon. Accordingly, the surface profile may effectively retain solidified material 112 on and/or around the burner 106.

The barrier distance may be 2 to 10 cm. The barrier distance may be 3 cm. The barrier distance may be a sufficient distance from the burner 106 (or burners 106), in use, such that the burner 106 flame does not contact the barrier 108. It will be appreciated that, if a burner 106 is (or if burners 106 are) positioned within the burner aperture 104 as described herein, the barrier distance may be a distance from the burner 106 (or burners 106), through the burner aperture 104, to the barrier 108 (e.g., as shown in Figure 5, where the barrier is mounted to the burner aperture 104). The barrier distance may be a distance from the burner 106 (or burners 106), through the burner aperture 104, across a portion of the first internal wall 102, to the barrier 108 (e.g., as shown in Figures 3 and 4, where the barrier is mounted to the first internal wall 102 away from the burner aperture 104). Additionally or alternatively, the barrier distance may be a distance from the perimeter of the burner aperture 104, across a portion of the first internal wall 102, to the barrier 108 (e.g., the barrier distance may simply be a distance from the burner aperture 104 to the barrier 108).

The barrier distance may vary around the barrier 108 surrounding the burner aperture 104 and/or the burner 106 (or burners 106). The burner aperture 104 and/or the burner 106 may be longer in one direction (e.g., the top to the bottom of the burner aperture 104 in Figure 4 and/or the burner 106), and may be shorter in another direction (e.g., left to right of the burner aperture 104 and/or the burner 106 in Figure 4). The burner aperture 104 and/or the burner 106 (and/or the effective perimeter of the burner or burners 106 as described herein) may define four sides, for example, two longer sides, and two proportionally shorter sides. The barrier 108 may define four sides, for example, two longer sides, and two proportionally shorter sides, in particular, the barrier 108 may comprise longer sides (e.g., top to bottom as shown in Figure 6) and shorter sides (e.g., left to right as shown in Figure 6), for example, the barrier 108 may form a rectangular shape when viewed from above. The barrier 108 may be located closer to the burner aperture(s) 104 and/or the burner(s) 106 along one side than another, for example, the barrier distance alongside the longer sides may have a smaller gap than the barrier distance alongside the shorter sides. The barrier distance may vary along a length of the barrier 108 itself. For example, as shown in Figures 4 and 6, when a single burner 106 is provided (e.g., an axial burner having a circular and/or annular shape when viewed from above), the barrier 108 (and barrier wall 110) may be linear. Accordingly, the barrier distance at specific portions of the barrier 108 (and the barrier wall(s) 110), for example a terminal end of the barrier wall 110, may be greater than at the portion closest to the burner 106 and/or burner aperture 104, for example, another terminal end, or a centre of the barrier wall 110. It will be appreciated that the barrier distance of the barrier 108 (and each barrier wall 110) from the burner(s) 106 and/or the burner aperture(s) 104 may vary along the length of the barrier 108 (and each barrier wall 110). The barrier distance as described herein may be considered to be a distance of any point of the barrier 108 (and barrier wall 110) to the closest respective point of the burner 106 and/or the burner aperture 104. Each barrier wall 110 of the barrier 108 may comprise a different barrier distance, for example as shown in Figure 6 where multiple barrier walls 110 are provided.

The barrier 108 may be a circular shape, e.g., when viewed from above. In particular, if a single burner 106 is provided, the burner provided as an axial burner, e.g., having a circular cross-section when viewed from above, the barrier may extend around the burner 106 in a circular shape.

It will be appreciated that the barrier may form any shape suitable to surround a burner 106 or burners 106; for example, the barrier may form a rectangular shape, a square shape, a circular shape, an oval shape, a diamond shape, any polygonal shape, etc. It will also be appreciated that the barrier 108 may be an equal distance around the burner 106 or burner aperture 104, and therefore may conform to the shape of the burner 106, or burners 106, or burner aperture 104.

The barrier 108 surrounding the burner aperture 104 and/or the burner 106 may define a perimeter that is between 1.05 to 3 times, or 1.05 to 2 times the perimeter defined by the burner aperture 104, e.g., when viewed from above, such as in Figure 4. The barrier 108 surrounding the burner aperture 104 and/or the burner 106 may define a perimeter that is between 1.05 to 1.4 times the perimeter defined by the burner aperture 104, e.g., when viewed from above, such as in Figure 4. The barrier 108 surrounding the burner aperture 104 and/or the burner 106 may define a perimeter that is between 1.05 to 3 times, or 1.05 to 2 times the perimeter of the burner 106 (or burners 106), e.g., when viewed from above. The barrier 108 surrounding the burner aperture 104 and/or the burner 106 may define a perimeter that is between 1.05 to 1.4 times the perimeter of the burner 106 (or burners 106), e.g., when viewed from above. It will be appreciated that when a single burner 106 or multiple burners 106 are provided, the burner or burners 106 may provide an effective perimeter (e.g., a perimeter extending around the or all of the burners 106). The barrier 108 surrounding the burner aperture 104 and/or the burner 106 may define a perimeter that is between 1.05 to 1.4 times (or 1.05 to 3 times, or 1.05 to 3 times) the effective perimeter of the burner 106 (or burners 106), e.g., when viewed from above. The barrier distance as described herein may be a distance from the effective perimeter of the burners 106, for example, as shown in Figure 4, the effective perimeter is indicated by reference numeral 120, and the barrier 110 is located a barrier distance away from the effective perimeter 120. The effective perimeter 120 may be a different shape to the overall shape of the burners 106, e.g., the burners 106 may be axial burners having an annular shape, and the effective perimeter 120 of the burners 106 may be rectangular and/or square, as shown in Figure 4. The effective perimeter may be a shape that contains the outermost portion(s) of the burner or burners 106. It will also be appreciated that more than one aperture 104 may be provided as described herein. In particular, multiple burner apertures 104 may be provided to each receive a single burner 106 (e.g., a single, circular, aperture 104 configured to receive a single axial burner 106). Multiple burner apertures 104 may be provided to each receive more than one burner 106 (e.g., a single, circular, aperture 104 configured to receive a single axial burner 106). The multiple burner apertures 104 may define an effective perimeter, similar to effective perimeter 120, and the barrier 108 may be located a distance away from the effective perimeter of the apertures 104. The aperture 104 as described herein may additionally or alternatively receive multiple burners 106.

The furnace 100 may further comprise at least one additional burner aperture 104 provided in the first internal wall 102 of the plurality of internal walls 102, 102', 102", 102"', the at least one additional burner aperture 104 being configured to receive a part of a burner 106 which outputs heat to generate heat within the melting chamber. The barrier 108 may surround the burner aperture 104 or burner apertures 104. At least one additional barrier 108 may surround each of the at least one additional burner aperture(s) 104. Accordingly, where more than one burner aperture 104 is provided, the burner apertures 104 may be surrounded by the barrier 108, or each burner aperture 104 may be surrounded by a respective barrier 108. The furnace 100 may further comprise at least one additional burner 106 provided in the first internal wall 102 of the plurality of internal walls 102, 102', 102", 102‴, the at least one additional burner 106 being configured to generate heat within the melting chamber. The barrier 108 may surround the burner 106 or burners 106. At least one additional barrier 108 may surround each of the at least one additional burner aperture(s) 104. Accordingly, where more than one burner 106 is provided, the burners 106 may be surrounded by the barrier 108, or each burner 106 may be surrounded by a respective barrier 108. The barrier 108 and/or the at least one additional barrier 108 may surround each of the burner 106 and the at least one additional burner 106. Accordingly, as described herein, the first internal wall 102 may include multiple burner apertures 104, and/or multiple burners 106, and may therefore include multiple barriers 108 surrounding each burner aperture 104 and/or burner 106. The additional apertures 104, burners 106, and/or barriers 108 may have any of, any combination of, or all of the features of the apertures 104, burners 106, and/or barriers 108 as described herein.

When multiple burner apertures 104 and/or burners 106 are provided, the burner apertures 104 and/or burners 106 may be equally spaced from one-another, e.g., in a linear arrangement, and/or may be placed non-equally spaced from one another.

The furnace 100 as described herein may be considered to be a self-crucible furnace 100. The burner 106 as described herein may be considered to be a submerged combustion glass melter, in use. In particular, the burner 106, in use, may be located below a liquid level of molten melt 122.

The barrier 108 as described herein may have a wall thickness of 3 to 10 mm. The barrier 108 as described herein may have a thickness of 5 mm. The or each barrier wall 110 may have a different thickness to another barrier wall 110 present in the barrier 108. Each barrier wall 110 may have the same thickness. The thickness of the barrier 108 may be sufficient to allow cooling of the barrier wall 110, for example, if an internal conduit for receiving cooling fluid extends therethrough, and/or by conduction of heat through the connection of the barrier wall 110 to the internal wall of the furnace 100.

The or each of the at least one barrier wall 110 may have a triangular and/or trapezoidal cross-sectional profile. In other words, the or each of the at least one barrier wall 110 may have a cross-sectional profile that is one of triangular and trapezoidal. The or each of the at least one barrier wall 110 may have a rectangular cross-sectional profile. The cross-sectional profile may be considered as the shape of the barrier wall 110 when cut through a cross-section perpendicular to a length (for example, the length of the wall extending around the burner aperture 104 and/or the burner 106) of the barrier wall 110. A triangular and/or trapezoidal cross-section may provide increased structural stability, for example, the base of the barrier wall 110 may be thicker at a base section than the portion of the barrier wall 110 positioned furthest from the internal wall of the furnace 100. A triangular and/or trapezoidal cross-section may additionally or alternatively provide increased heat transfer from the surface of the barrier wall 110, through the first internal wall 102 via conduction.

As will be appreciated, when more than one barrier wall 110 is present, the cross-sectional profile of each barrier wall 110 may or may not be the same. The triangular and/or trapezoidal cross-sectional profile may otherwise be considered to represent a conically shaped cross-sectional profile.

There is also provided a process for melting material using the furnace 100 as described herein, the process comprising:
i) introducing material into the melting chamber through a furnace inlet; and
ii) heating the material using the burner 106.

As will be appreciated, the process step of heating the material using the burner 106 may include melting the material into a melt. Once the melt 122 has formed, the process may further include the step of withdrawal of the melt 122 from the melting chamber through a furnace outlet.

The process may further comprise:
iii) circulating a cooling fluid in the internal conduit of the internal wall and/or the internal conduit of the barrier 108.

As will be appreciated, when multiple barrier walls 110 are present, when each barrier wall 110 (or more than one of the multiple barrier walls 110) includes an internal conduit for receiving cooling fluid, cooling fluid may be circulated through each of the internal conduits.

The process may further comprise, prior to introducing the material into the furnace 100, coating at least a portion of at least one of the first internal wall 102 of the melting chamber and a portion of the burner 106 with a layer of concrete. The layer of concrete may protect the surface of the first internal wall 102 and/or the burner 106. In particular, thermal shock may be reduced on the surface of the first internal wall 102 and/or the burner 106. The layer of concrete may be replaced by solidified material 112 over time, for example, devitrified material. In particular, the melt 122 (e.g., vitrified melt) may effectively "eat" away the layer of concrete, i.e., the melt 122 may remove the layer of concrete over time, and the melt 122 may solidify (e.g., devitrify) on the surface of the first internal wall 102 and/or the burner 106, once the layer of concrete is fully removed (at least at a portion of the first internal wall 102 and/or the burner 106 where the layer of concrete has been removed). It will be appreciated that if concrete is placed on the surface of the burner 106, that the conduit for producing and combusting combustion gases will not be covered.

There is also provided use of the furnace 100 as described herein in melting material. The furnace 100 may comprise any of, any combination of, or all of the features of the furnace 100 for melting material as described herein.

With reference to Figures 1 to 7, there is also provided an internal wall for a furnace 100 as described herein. The internal wall may be the first internal wall 102 as described herein.

The first internal wall 102 may comprise any of, any combination of, or all of the features (and/or advantages) of the first internal wall 102 as described in relation to the furnace 100 for melting material as described herein. In particular, the first internal wall 102 may comprise the burner aperture 104 (or burner apertures 104), and/or the burner 106 (or burners 106), and/or the barrier 108 as described herein.

Accordingly, the first internal wall 102 may be provided separately to the rest of the furnace 100 for melting material. Accordingly, the furnace 100 for melting material as described herein may be provided in a modular arrangement.

The first internal wall 102 may be configured to be connected to a plurality of internal walls 102, 102', 102", 102‴ of the furnace 100 as described in more detail herein, so that, in use, the first internal wall 102 and the plurality of internal walls 102, 102', 102", 102‴define the melting chamber at least partly enclosed by the plurality of internal walls 102, 102', 102", 102‴. Accordingly, the internal wall may be the first internal wall 102 of the plurality of internal walls 102, 102', 102", 102‴ of the furnace.

The connection may comprise permanent connection means, e.g., welding, or semi-permanent / removable connection means, e.g., bolts and gaskets.

The first internal wall 102 may include a burner aperture 104 provided in the first internal wall 102, the burner aperture 104 being configured to receive a part of a burner 106 which outputs heat to generate heat within the melting chamber. The first internal wall 102 may include a burner 106 provided in the first internal wall 102, the burner 106 being configured to output heat to generate heat within the melting chamber. The burner 106 positioned in the first internal wall 102 may be positioned within the burner aperture 106 as described herein. The first internal wall 102 may comprise a barrier 108 carried by the first internal wall 102. The barrier 108 may comprise at least one barrier wall 110 which extends outwardly from the first internal wall 102. The or each barrier wall 110 may be positioned at a respective barrier distance from the burner aperture 104 and/or the burner 106. The or each barrier wall 110 may be arranged so that the barrier 108 at least partly surrounds the burner aperture 104 and/or the burner 106 so that, in use, the barrier 108 retains a layer of solidified material 112 over a portion of the first internal wall 102 around the barrier 108 to protect the portion of the first internal wall 102 from damage by forces and heat within the melting chamber.

The following features of the internal wall (and first internal wall 102) are described below for completeness. The following features of the first internal wall 102 and their respective advantages are discussed in more detail herein in relation to the furnace 100. It will be appreciated that such discussion of features as described herein in relation to the furnace 100 applies equivalently to the internal wall (and first internal wall 102).

The burner 106 may be provided in a burner aperture 104 provided in the first internal wall 102. The burner aperture 104 may surround the burner 106. A spatial gap may be provided between the burner 106 and the burner aperture 104. The at least one barrier wall 110 may be positioned proximal the burner aperture 104 and through the first internal wall 102. The at least one barrier wall 110 of the barrier 108 may be integrally formed with the first internal wall 102 of the melting chamber. The at least one barrier wall 110 of the barrier 108 may be mounted to the first internal wall 102 of the melting chamber via a mounting arrangement. The mounting arrangement may comprise at least one of: a weld between the barrier wall 110 and the first internal wall 102; and a bolt arrangement extending through a mounting portion of the at least one barrier wall 110 and the first internal wall 102. The or each barrier wall 110 may include an internal conduit for receiving cooling fluid. The first internal wall 102 of the melting chamber may comprise an internal conduit for receiving cooling fluid. The internal conduit of the first internal wall 102 and the internal conduit of the or each barrier wall 110 may form a continuous internal conduit. The barrier 108 may comprise: at least two barrier walls 110; and a split portion located between terminal ends of each barrier wall 110. The split portion may have a split length. The split length may be 1 to 10 mm. The internal wall may further comprise concrete covering at least a portion of the surface of the first internal wall 102. The barrier 108 may be comprised of one or more of: steel; steel including a surface coating; and tungsten. The burner 106 may comprise a solidified material collecting surface profile. The surface profile may comprise a discontinuous surface profile. The barrier distance may be 2 to 10 cm. The internal wall may further comprise: at least one additional burner aperture 104 provided in the first internal wall 102 of the plurality of internal walls, the at least one additional burner aperture 104 being configured to receive a part of a burner 106 which outputs heat to generate heat within the melting chamber. The barrier 108 may have a wall thickness of 3 to 10 mm. The or each of the at least one barrier wall 110 may have a cross-sectional profile that is one of triangular and trapezoidal. The internal wall may further comprise at least one additional barrier 108 as described herein surrounding each of the at least one burner aperture(s) 104.

There is also provided a burner and barrier arrangement for a furnace 100 for melting material. The furnace 100 as described herein in relation to the burner and barrier arrangement may comprise any of, any combination of, or all of the features of the furnace 100 for melting material as described herein.

In particular, the furnace 100 may comprise a plurality of internal walls 102, 102', 102", 102‴ and a melting chamber at least partly enclosed by the plurality of internal walls 102, 102', 102", 102‴.

The burner and barrier arrangement may comprise a burner 106 configured to be positioned in a first internal wall 102 of the plurality of internal walls 102, 102', 102", 102‴ of the furnace or within a burner aperture 104 provided in the first internal wall 102 of the plurality of internal walls 102, 102', 102", 102‴ of the furnace, the burner 106 being configured to output heat to generate heat within the melting chamber. The burner and barrier arrangement may comprise a barrier 108 configured to be carried by the first internal wall 102, wherein the barrier 108 comprises at least one barrier wall 110 which is configured to extend outwardly from the first internal wall 102. The or each barrier wall 110 may be configured to be positioned at a respective barrier distance from the burner 106 and/or the burner aperture 104, the or each barrier wall 110 being configured to be arranged so that the barrier 108 at least partly surrounds the burner 106 so that, in use, the barrier 108 retains a layer of solidified material 112 over a portion of the first internal wall 102 around the barrier 108 to protect the portion of the first internal wall 102 from damage by forces and heat within the melting chamber.

As will be appreciated, the burner 106 of the burner and barrier arrangement may comprise any of, any combination of, or all of the features and/or advantages of the burner 106 as described herein, for example the burner 106 as described in relation to the furnace 100 for melting material as described herein. The barrier 108 of the burner and barrier arrangement may comprise any of, any combination of, or all of the features and/or advantages of the barrier 108 as described herein, for example the barrier 108 as described in relation to the furnace 100 for melting material as described herein.

The following features of the burner and barrier arrangement are described below for completeness. The following features of the burner and barrier arrangement and their respective advantages are discussed in more detail herein in relation to the furnace 100. It will be appreciated that such discussion of features as described herein in relation to the furnace 100 applies equivalently to the features of the burner and barrier arrangement described below.

The or each barrier wall 110 may include an internal conduit for receiving cooling fluid. The barrier 108 may be comprised of one or more of: steel; steel including a surface coating; and tungsten. The burner 106 may comprise a solidified material collecting surface profile. The surface profile may comprise a discontinuous surface profile. The barrier 108 may have a wall thickness of 3 to 10 mm. The or each of the at least one barrier wall 110 may have a cross-sectional profile that is one of triangular and trapezoidal. As will be appreciated, the burner 106 and/or barrier 108 as described herein in relation to the burner and barrier arrangement may have the same features and/or advantages as described herein in relation to the furnace 100.

Accordingly, as will be appreciated, features and/or advantages may be shared between the furnace 100, internal wall, burner and barrier arrangement, process of using the furnace 100, and use of the furnace, as described herein.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. An internal wall for a furnace for melting material, the internal wall configured to be connected to a plurality of internal walls of the furnace, so that, in use, the internal wall is a first internal wall of the plurality of internal walls of the furnace, and the first internal wall and the plurality of internal walls of the furnace define the melting chamber at least partly enclosed by the first internal wall and the plurality of internal walls;
the first internal wall including:
a burner aperture provided in the first internal wall, the burner aperture being configured to receive a part of a burner which outputs heat to generate heat within the melting chamber; and
a barrier carried by the first internal wall, wherein the barrier comprises at least one barrier wall which extends outwardly from the first internal wall, the or each barrier wall being positioned at a respective barrier distance from the burner aperture
wherein the or each barrier wall is arranged so that the barrier at least partly surrounds the burner aperture so that, in use, the barrier retains a layer of solidified material over a portion of the first internal wall around the barrier to protect the portion of the first internal wall from damage by forces and heat within the melting chamber.

2. The internal wall according to claim 1, wherein the at least one barrier wall is positioned proximal the burner aperture and through the first internal wall.

3. The internal wall according to claim 1 or 2, wherein the at least one barrier wall of the barrier is integrally formed with the first internal wall of the melting chamber.

4. The internal wall according to any preceding claim, wherein the at least one barrier wall of the barrier is mounted to the first internal wall of the melting chamber via a mounting arrangement, the mounting arrangement comprising at least one of:
a weld between the barrier wall and the first internal wall; and
a bolt arrangement extending through a mounting portion of the at least one barrier wall and the first internal wall.

5. The internal wall according to any preceding claim, wherein the or each barrier wall includes an internal conduit for receiving cooling fluid; and/or
wherein the first internal wall comprises an internal conduit for receiving cooling fluid.

6. The internal wall according to any of claims 1 to 4, wherein
the or each barrier wall includes an internal conduit for receiving cooling fluid,
the first internal wall comprises an internal conduit for receiving cooling fluid, and
the internal conduit of the first internal wall and the internal conduit of the or each barrier wall forms a continuous internal conduit

7. The internal wall according to any preceding claim, wherein the barrier comprises:
at least two barrier walls; and
a split portion located between terminal ends of each barrier wall, wherein the split portion has a split length, and wherein the split length is 1 to 10 mm.

8. The internal wall according to any preceding claim, further comprising concrete covering at least a portion of the surface of the first internal wall.

9. The internal wall according to any preceding claim, wherein the barrier is comprised of one or more of:
steel;
steel including a surface coating; and
tungsten.

10. The internal wall according to any preceding claim, wherein the barrier distance is 2 to 10 cm; and/or wherein the barrier has a wall thickness of 3 to 10 mm.

11. The internal wall according to any preceding claim, further comprising:
at least one additional burner aperture provided in the first internal wall of the plurality of internal walls, the at least one additional burner aperture being configured to receive a part of a burner which outputs heat to generate heat within the melting chamber; and
at least one additional barrier according to any preceding claim surrounding each of the at least one burner aperture(s).

12. The internal wall according to any preceding claim, wherein the or each of the at least one barrier wall has a cross-sectional profile that is one of triangular and trapezoidal.

13. The internal wall according to any preceding claim, wherein the material has a melting point between and including 700 to 1700 degrees Celsius; preferably wherein the material has a melting point between and including 700 to 1200 degrees Celsius; and preferably wherein the material is vitrifiable material.

14. A furnace for melting material, the furnace comprising:
a plurality of internal walls, wherein one of the plurality of internal walls is an internal wall according to any of claims 1 to 13; and
a melting chamber at least partly enclosed by the plurality of internal walls.

15. The furnace according to claim 14, wherein the material has a melting point between and including 700 to 1700 degrees Celsius; preferably wherein the material has a melting point between and including 700 to 1200 degrees Celsius; and preferably wherein the material is vitrifiable material.
